# EUROPEAN PATENT APPLICATION

(11) **EP 2 494 897 A1**
(43) Date of publication of application: **05.09.2012**
(21) Application number: 11165197.2
(22) Date of filing: 06.05.2011
(51) Int. Cl.: A47J 43/10, A47J 43/27

(54) **Egg scrambler device**

(30) Priority: 02.03.2011 US 448276 P; 31.03.2011 US 76764
(71) Applicant: Hutzler Manufacuting Co., Inc., Canaan CT 06018 (US)
(72) Inventor: Kolano, William, Pittsburgh, PA 15215 (US)
(74) Representative: Hanson, William Bennett

(57) **Abstract**

An egg scrambler device (10) includes an upper shell (20) constructed with an outer shell surface, an inner shell surface and a connector (22, 23), wherein the inner shell surface defines an inner volume and includes baffles (24) to effect mixing of fluid content. A lower shell (40) is constructed with an outer shell surface, an inner shell surface and a connector (46), wherein the inner shell surface defines an inner volume and includes baffles (44) for mixing of fluid content. The upper and lower shells (20, 40) are detachably connected to allow fluid communication between the upper and lower volumes and to aerate and homogenize the content by shaking or otherwise agitating the device with the shells in a connected state.

## Description

The present invention relates to a device for the improved handling and food processing of raw eggs.

Eggs have been part of human diets for time immemorial. Bird eggs in particular are a common food and one of the most versatile ingredients used in cooking, including in baked goods. The most commonly used bird eggs are those from the chicken, while duck, goose and quail eggs are occasionally used as a gourmet ingredient. Eggs can be scrambled, fried, hard-boiled, soft-boiled, pickled and refrigerated. For that matter, eggs can be eaten raw, for example, in salads and shakes or nogs.

As an ingredient, egg yolks are an important emulsifier in the kitchen, and the proteins in egg white allow it to form foams and aerated dishes. The albumen, or egg white, contains protein but little or no fat. The egg white can be used in cooking separately from the yolk. Egg whites may be aerated or whipped to a light, fluffy consistency and are often used in desserts such as meringues and mousse. Ground egg shells are sometimes used as a food additive to deliver calcium. Every part of an egg is edible, although the eggshell is generally discarded.

As anyone who has attempted to separate an egg white from an egg yolk knows, effectively separating an egg is a difficult task. That is, attempts to segregate an egg yolk from an egg white require somehow limiting the flow of one part while facilitating the flow of the other part into a container, mixing or cooking means. This invariably requires some type of contact with the egg yolk or egg white. More often than not, there will be some portion of egg white with the yoke portion, and some yolk with the egg white portion.

In addition to separation problems, there also are know combining problems in handling eggs for food processing. For example, scrambling of eggs can be quite messy. First the eggs must be broken. You cannot make an omelette without breaking a few eggs so they say. In some cases, the egg is struck by a utensil, to split it while maintaining some of its structural integrity, where often times the egg separates and the parts fall. In other cases the egg itself is struck against an edge of a mixing container, such as a bowl, and further handled to pour into same. This typically results in shell mixing with the content, and loss of some egg material on the side of the bowl.

In a case where an egg must be mixed, or scrambled, the egg is placed in a container, usually an open bowl, and agitated with a fork. The egg material typically spins within a vessel, and some portion invariably is ejected from same. Effectively combining and scrambling egg white with egg yolks can be more of a challenge, particularly where aeration and whipping is desired. There is always a risk of under combining in order to avoid spillage. Under-combined scrambled eggs, for example, results in a cooked egg dish with white and yellow parts having different tastes and textures, which are thought to be unpalatable to some.

It is an aim of the present invention to provide a device for handling, including mixing of food content designed to overcome the shortcomings of the prior art.

The invention provides an egg scrambler device according to claim 1. Optional features of the invention are set out in the dependent claims.

In one embodiment, the invention includes an egg scrambler device includes an upper shell constructed with an outer shell surface, an inner shell surface and a connector, where the inner shell surface defines an inner volume and includes baffles to effect mixing of fluid content. A lower shell is constructed with an outer shell surface, an inner shell surface and a connector, where the inner shell surface defines an inner volume and includes baffles for mixing of fluid content. The upper and lower shells are detachably connected to allow fluid communication between the upper and lower volumes and to aerate and homogenize the content by shaking or otherwise agitating the device with the shells in a connected state. A mixing ball is preferably inserted within the inner volume prior to connecting the upper and lower shells, which further facilitates aeration and homogenization of the fluid content upon shaking and agitation.

The present invention can best be understood in connection with the accompanying drawings. It is noted that the invention is not limited to the precise embodiments shown in the drawings, in which:

Fig. 1 is a side perspective view of one embodiment of an egg scrambler device of the invention;

Fig. 2 is a side cutaway view of the Fig. 1 egg scrambler device;

Fig. 3 is an exploded perspective of the Fig. 1 egg scrambler device; and

Fig. 4 is a side view depicting the internal structure of the Fig. 1 egg scrambler device.

The following is a detailed description of example embodiments of the invention depicted in the accompanying drawings. The example embodiments are in such detail as to clearly communicate the invention and are designed to make such embodiments obvious to a person of ordinary skill in the art. However, the amount of detail offered is not intended to limit the anticipated variations of embodiments; on the contrary, the intention is to cover all modifications, equivalents, and alternatives falling within the scope of the present invention, as defined by the appended claims.

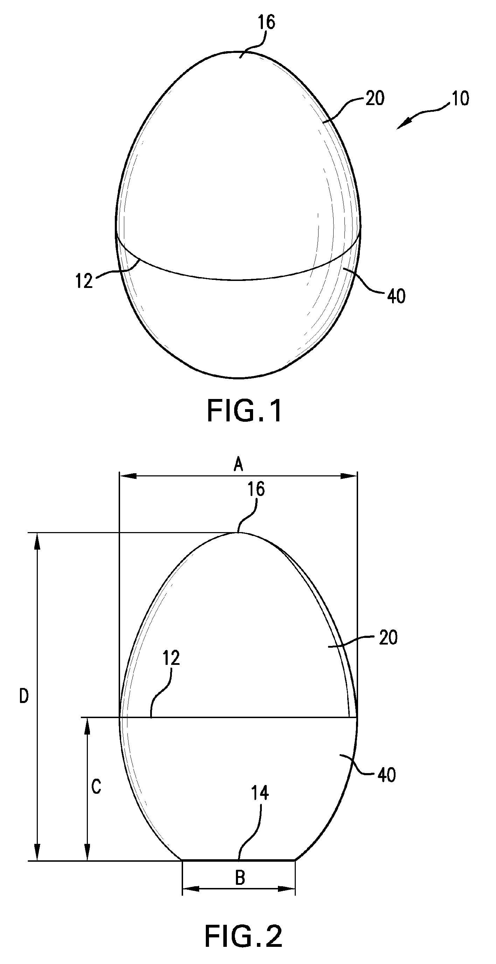

Fig. 1 depicts an embodiment of an egg scrambler device 10 in a form of an egg-shaped housing. Please note, however, that the depiction an egg-shaped housing is for a preferred embodiment, and the invention is not meant to be limited to any particular shape. The egg scrambler device 10 comprises an upper shell 20 and a lower shell 40 that are fitted together in a way to maintain their connection during agitation of contents inserted within an inner volume. While shown fully assembled together in Fig. 1, the respective shells are readily separated during intended use. When assembled as shown, a connecting circumferential edge of the upper shell extends over and connects with a recessed circumferential edge of the lower shell, sealing the two shells along a seam 12 to prevent leakage.

Fig. 2 highlights some of the outer physical dimensions of the Fig. 1 egg scrambler device 10. At its widest part, the egg scrambler device 10 is approximately 85 to 90 mm, preferably 90 mm (dimension "A"). The egg scrambler device has a base 14, which is flat to allow the device to be securely placed on flat surfaces. The base 14 is approximately 35-45 mm wide, preferably 41 mm (dimension "B"). The height from the base 14 to the seam 12 is approximately 50 to 55 mm, preferably 53 mm (dimension C) and the height from the base 14 to a an uppermost point or top 16 on upper shell 20 is approximately 115 to 130 mm, preferably 123 mm (dimension D).

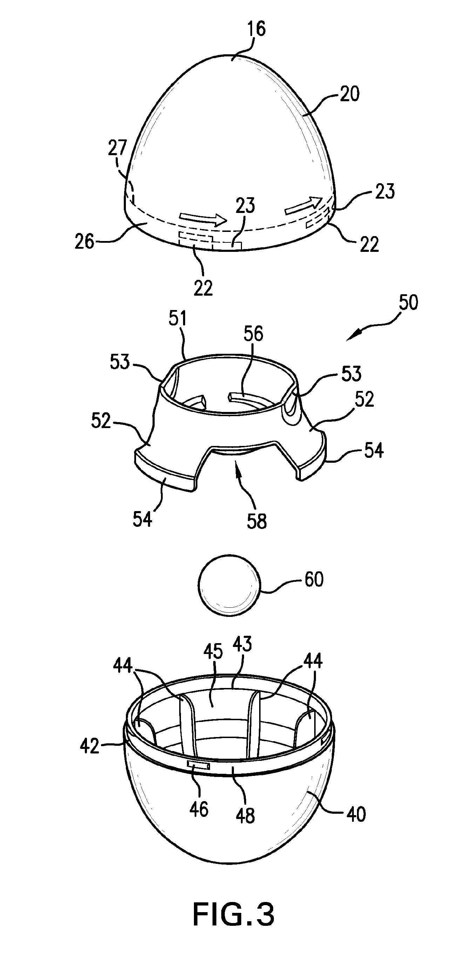

Fig. 3 highlights an inner volume of the Fig. 1 egg scrambler device 10, including the structural elements therein. In the egg scrambler device, a central axis extends from the top 16 to an axial center of base 14. The lower shell 40 is substantially hollow but for a series of baffles 44 that are attached and integral with an interior wall or surface 45. The baffles 44 are positioned in a number of positions about the inner circumferential extent of the interior wall or surface 45. For example, the baffles may be affixed at positions along the circular inner wall corresponding to π/4 or π/3 radians. The baffles 44 extend vertically along a contour of the inner wall 44 from a position substantially just below a connecting rim 48 to an outer circumferential edge of the base 14.

The baffles 44 are thin (on the order of 1 to 2 mm, preferably 1.5 mm.) and extend radially inwardly from the interior wall or surface 44 (within the inner lower shell volume) towards the central axis of the egg scrambler device. At the flat bottom, where the baffles meet the base 14, they extend towards the axial center an insignificant amount (for example, 0 to 10 mm, and preferably 5 mm). The baffles 44 do, however, increase in radial extent as a function of increasing vertical distance between the base 14 and the connecting rim 48. The baffles assist in mixing or scrambling device content when the upper shell is connected to the lower shell and the closed device is agitated.

The rim 48 preferably includes at least one recessed portion 47 configured therein to better enable eggs to be broken against the rim 48. That is, a whole egg is struck against the rim 48 at the recessed portion 47 in order to more readily crack the shell at the point of contact, and to minimize chance of egg content spillage thereby. The egg within the cracked shell is thereafter deposited into the lower shell inner volume.

The connecting rim 48 defines an outer recess 42. The recess 42 extends radially from the outer surface of the lower shell 40 in towards the central axis approximately 1 to 3 mm to the outer wall surface of the rim 48, but preferably 1. 5 mm. The vertical extent of the recessed rim 48 is between 5 and 15 mm, but preferably 8 mm, as shown. A number of detent elements 46 are included along the circumferential extent of the rim 48 to effect secure connection with upper housing shell 20 (discussed in more detail below). The connecting rim 48 also includes an inner recess 43. The inner recess 43 extends radially from the inner surface of the lower shell 40, radially outwardly approximately 1 to 3 mm (preferably 1.5 mm) to the inner wall surface of the rim 48.

The upper shell 20 of the egg scrambler device is substantially hollow but for a series of baffles 24 that are attached and integral with an interior wall or surface 21. The baffles 24 are positioned in a number of positions about the inner circumferential extent of the interior wall or surface 21, for example, at positions corresponding to π/4 or π/3 radians. The baffles 24 extend vertically along a contour of the inner wall or surface 21 from a position substantially just above a connecting rim 26 to the top 16. The connecting rim is formed as a recess 27 in the shell structure, set off from inner surface 21 in a way that enables connection with the rim 48 of the lower shell 40.

That is, the connecting rim 26 includes openings 22 to channels 23 for receiving the detent elements 46 on rim 48 of the lower shell 40. The upper and lower shells are pressed together to insert the detent elements 46 into openings 22. The shells are twisted to cause the detent elements 46 to slide horizontally into channels 23 to secure the detent elements 46 therein. To open the inner volume and separate the upper and lower shells, they are twisted the other way to allow the detent elements to be displaced from the openings 22.

An insert 50 is seated within the lower shell 40 upon the inner recess 43, radially inward of rim 48. The insert 50 includes an internal spherical seat formed as a continuous spherical surface between an upper rim or edge 51 and a surface bottom. The bottom of the spherical surface includes a via 58 at an axial center, which is between 4 and 10 mm, but preferably 7mm. While the spherical seat so formed captures content, for example, liquid egg components and like materials, the central via allows for some to pass through and down. Horizontal openings 56 are formed in the sides of the spherical seat to facilitate separation of egg whites from egg yokes when a whole egg (without the shell) is deposited therein. There are three openings 56 in the embodiment shown, which are between 20 mm and 50 mm long (preferably 25 mm) and 2-10 mm wide (preferably 5 mm). The width may be varied as a function of length to better facilitate egg part separation.

A number of insert legs 52 extend contiguously down and radially outwards from the insert rim 51 to form seating members 54. Seating members 54 abut an inner surface of rim 48, as shown in Fig. 3. The legs 52 are formed between openings or breaks in the outer circumference of the insert to facilitate passage of separated egg content into the inner volume of lower shell 40.

The upper circumferential edge 51 of insert 50 preferably includes at least one recessed portion 53, upon which an egg may be struck to crack the egg's shell. Breaking an egg against the recessed portion of the insert 50 assures that the egg content is delivered into the spherical seat. The recessed portion 53 is preferably straight, as distinguished from a circumferential line of the circumferential edge 51, but may be curved to follow the curve of surface 51. The length of the recessed portion is between 10 mm and 40 mm, but preferably 20 mm.

When use of the insert 50 is no longer required, the insert 50 is removed from the lower shell 40. In order to then thoroughly mix the egg content within the lower shell inner volume, a mixing ball 60 may be placed therein (in the lower shell 40). Upon connection of the upper and lower shells, the egg scrambler is shaken to agitate the content therein, whereby the mixing ball 60 is dislodged. The movement of the mixing ball within an inner volume of the upper shell 20 and lower shell 40 acts to mix and agitate any liquid and like components its contacts, in cooperation with the baffles (24; 44). For example, the movement of the mixing ball 60 more efficiently mixes scrambled eggs delivered into the egg scrambler device 10 for that purpose. The mixing ball may be hollow, but is preferably solid or semi-solid as its effectiveness as a mixing means increases with its overall weight.

If an egg is to be separated into a yoke portion and a white portion, it is broken on the insert recessed portion 53 and poured into the spherical seat of the insert 50. The egg white portion naturally slides through the openings 56 into the lower volume comprising the lower shell 40, whereas the egg yoke remains in the spherical seat. The insert with the egg yolk in the spherical seat may be removed and the egg yoke content poured or delivered to another vessel. This leaves the egg white portion in the lower shell without the insert 50. The egg white portion is then mixed by inserting the mixing ball 60 into the lower shell inner volume, connecting the top shell 20 with the lower shell 40, and agitating the connected shells.

Upon removing the top shell 20, the mixing ball may be removed before the mixed content is poured or delivered to another vessel, e.g., a frying pan. Removing the mixing ball 60, however, is messy. Alternatively, the mixing ball 60 may be left in the inner volume of the lower shell 40, and the insert 50 replaced prior to pouring in order that the insert operate to prevent the mixing ball 60 from passing out of the lower shell 40 when it is tilted to discharge (pour) the mixed content. Put another way, when seated in lower shell 40, insert 50 acts as a colander and allows the contents to flow out without the mixing ball, and without any need to "touch" the content or otherwise restrain the mixing ball.

The egg scrambler device 10 is adapted to be opened by separating the upper shell 20 from the lower shell 40, and content for mixing (or separating in a case of eggs) is inserted therein. The lower shell 40 may be filled up to inner recess 43 without spillage. If no separation of egg content is required, use of the insert 50 is not necessary, but for its use as a colander, as described above. Eggs are merely cracked against the recessed portion 53 in rim 51 and passed into the inner volume of the lower shell 40. The mixing ball 60 is then inserted into the lower shell 40 before the upper shell is secured to the lower shell.

Once the shells are secured, the egg scrambler device 10 is thoroughly shaken to agitate and mix the content against the baffles and with the help of the moving mass of the mixing ball. Doing so aerates and homogenizes the egg components, as well as any other contents inserted for mixing. For example, the egg scrambler device may effectively and efficiently form a batter, such as a pancake batter, where additional elements such as flour and milk are added with any eggs.

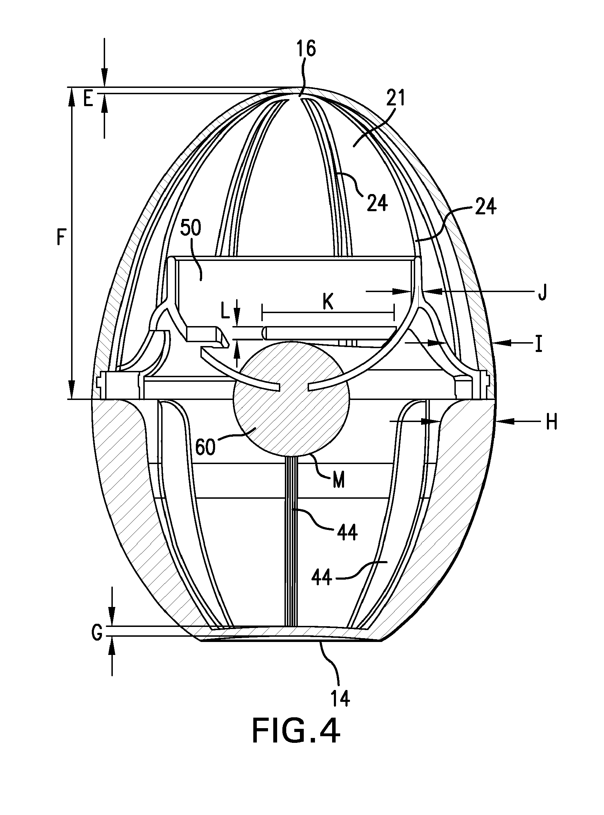

The egg scrambler device is preferably manufactured as a hard plastic, but is not limited thereto. Preferably, parts of the device shown in Fig. 3 are manufactured separately, by injection molding. Fig. 4 provides the dimensional details of the various features comprising the preferred embodiment. For example, the thickness of the upper shell 20 proximate its top is between 1 and 2 mm, but preferably 1.5 mm. (dimension "E"), whereas the length of the upper shell between the top 16 and the seam 12 is between 65 and 75 mm, but preferably 70mm (dimension "F"). The thickness of the base 14 is between 1 and 3 mm, but preferably 2mm (dimension G). The maximum radial extent of the lower shell baffles (proximate the seam 12) is between 10 and 14 mm, but preferably 12mm (dimension "H"). The maximum radial extent of the upper shell baffles (proximate the seam 12) is between 8 and 12 mm, but preferably 10 mm (dimension "I").

The thickness of the structure forming the insert 50 is between 1 and 3 mm, but preferably 1.85 mm (dimension "J"). The length of the separating vent 56 within insert 50 is between 20 and 40 mm, but preferably 25 mm (dimension "K"), where its width is between 2 and 4 mm, but preferably 2.8 mm (dimension "L"). The radius of the mixing ball 60 is between 20 and 30 mm, but preferably 25 mm (dimension "M"). While the mixing ball may be hollow, the effectiveness of mixing is increased with its weight so is preferably solid, or semi-solid.

All of the parts of the egg scrambler device are readily cleanable using known means. For that matter, the insert 50 and mixing ball 60 may be stored in the inner volume during non-use. Please note, while the mixing ball 60 is intended for placement in the lower shell 40 after removal of the insert 50 (if the insert is used at all), the invention is not limited to such operation. For example, the insert might be used, and the mixing ball merely seated within the insert's spherical seat, whereby both the insert and the mixing ball remain upon closure.

This is not preferred, however, as the mixing ball is thereby segregated in the inner volume of the upper shell 20 (or the lower shell 40) when the shells are connected with the insert remaining in place. Upon agitation and mixing, and removal of the top shell 20, both the insert 50 and mixing ball 60 may be removed before attempting to pour out the mixed content in the inner volume of the lower shell. Alternatively, just the mixing ball 60 may be removed while leaving the insert 50 in place when pouring.

In the foregoing description, certain terms and visual depictions are used to illustrate the preferred embodiment. However, no unnecessary limitations are to be construed by the terms used or illustrations depicted, beyond what is shown in the prior art, since the terms and illustrations are exemplary only, and are not meant to limit the scope of the present invention.

It is further known that other modifications may be made to the present invention, without departing the scope of the invention, as noted in the appended claims.

## Claims

1. An egg scrambler device, comprising:
an upper shell (20) constructed with an outer shell surface, an inner shell surface and upper connecting means (22, 23), wherein the inner shell surface is configured to define an inner volume with means for mixing of fluid content therein; and
a lower shell (40) constructed with an outer shell surface, an inner shell surface and lower connecting means (46), wherein the inner shell surface is configured to define an inner volume with means for mixing of fluid content therein;
wherein the upper and lower shells (20, 40) are detachably connected to allow fluid communication between the upper and lower volumes such that fluid content is aerated and homogenized by shaking or otherwise agitating the device with the shells in a connected state.

2. The egg scrambler device as defined by claim 1, wherein the upper and lower shells (20, 40) form a liquid impervious seal when detachably connected.

3. The egg scrambler device as defined by claim 1 or 2, wherein the means for mixing comprise baffles (24, 44) fixed to the inner surface of at least one of the upper and lower shells (20, 40).

4. The egg scrambler device as defined by claim 1, 2 or 3, further comprising a removable insert (50) with an egg receiving portion configured to separate egg whites from egg yolks and a seating portion (52, 54) for seating the insert in the lower shell (40).

5. The egg scrambler device as defined by claim 4, wherein the egg receiving portion includes openings (56) that limit through movement of egg materials.

6. The egg scrambler device as defined by claim 4 or 5, wherein the insert (50) includes means (53) for breaking an egg.

7. The egg scrambler device as defined by claim 4, 5 or 6, wherein the insert (50) forms a boundary between the upper and lower inner volumes and wherein the seating portion comprises a plurality of legs (52, 54) configured for placement on an upper circumferential rim (43) on an inner surface of the lower shell (40).

8. The egg scrambler device as defined by claim 4, 5 , 6 or 7, wherein the insert (50) is removed from its seating portion in the lower shell (40) before the top shell (20) is connected to the lower shell for mixing.

9. The egg scrambler device as defined by any preceding claim, further comprising a mixing ball (60) that is inserted into the inner volume and when the upper and lower shells (20, 40) are connected, which mixing ball (60) further affects mixing of device content when shaken or otherwise agitated in a connected state.

10. The egg scrambler device as defined by claim 9, wherein the mixing ball (60) is inserted into the inner volume of the lower shell (40) and a/the removable insert (50) with a seating portion (52, 54) for seating the insert in the lower shell (40) is inserted in the lower shell to operate as a colander to prevent the ball (60) from being delivered with the mixed content when poured.

11. The egg scrambler device as defined by any preceding claim, configured to resemble an egg when the upper and lower shells (20, 40) are connected.

12. The egg scrambler device as defined by any preceding claim, wherein the lower shell (40) is formed with a flat bottom portion (14) to allow the device to sit securely on a flat surface.

13. The egg scrambler device as defined by any preceding claim, wherein an inner volume of the bottom shell (40) is configured to contain a fluid amount between approximately 50 ml and 500 ml.

14. The egg scrambler device as defined by claim 6, wherein the insert (50) includes a rim (51) and wherein the means for breaking an egg is formed as a recessed portion (53) within the rim (51) upon which the egg is struck to effect breaking.
